# EUROPÄISCHE PATENTSCHRIFT

(11) **EP 2 707 617 B1**
(45) Veröffentlichungstag und Bekanntmachung des Hinweises auf die Patenterteilung: **18.03.2015**
(21) Anmeldenummer: 12732548.8
(22) Anmeldetag: 10.05.2012
(51) Int. Cl.: F16D 27/112, F16D 35/02, F16D 47/06, F01P 7/08

(54) **KUPPLUNGSANORDNUNG SOWIE ANSTEUERVERFAHREN**
CLUTCH ARRANGEMENT AND ACTUATION METHOD
SYSTÈME D'EMBRAYAGE ET PROCÉDÉ DE COMMANDE

(30) Priorität: 13.05.2011 DE 102011050366
(43) Veröffentlichungstag der Anmeldung: 19.03.2014
(73) Patentinhaber: Kendrion (Markdorf) GmbH, 88677 Markdorf (DE)
(72) Erfinder: TILLY, Christian, 88690 Uhldingen-Mühlhofen (DE)
(74) Vertreter: Wagner, Kilian
(86) Internationale Anmeldenummer: PCT/EP2012/058609
(87) Internationale Veröffentlichungsnummer: WO 2012/156264

(56) Entgegenhaltungen:
- WO-A1-2004/007923
- DE-U1- 8 908 357
- JP-A- 54 111 027

## Beschreibung

Die Erfindung betrifft eine Kupplungsanordnung zum Übertragen eines Antriebsdrehmomentes von einer Antriebswelle auf ein Nebenaggregat, insbesondere auf ein Lüfterrad, eines Kraftfahrzeuges, gemäß dem Oberbegriff des Patentanspruches 1, umfassend eine Antriebswelle, einen Abtrieb, sowie eine mittels einer Elektromagnetanordnung schaltbare Reibscheibenkupplung. Ferner betrifft die Erfindung ein Ansteuerverfahren gemäß dem Oberbegriff des Patentanspruchs 14 zum Ansteuern einer derartigen Kupplungsanordnung.

Grundsätzlich bekannt sind ein- oder mehrstufige Reibscheibenkupplungen zum Antreiben von Nebenaggregaten wie Lüfterrädern. Solche, beispielsweise als elektromagnetisch betätigbare Kupplungen ausgebildete Reibscheibenkupplungen sind beispielsweise in der EP 0 317 703 A2, der DE 32 031 43 C2 sowie der DE 42 07 710 A1 beschrieben. Bezüglich des grundsätzlichen Aufbaus, der Wirkungsweise sowie des Einsatzgebietes derartiger Reibscheibenkupplungen wird auf diese Veröffentlichungen verwiesen. Reibscheibenkupplungen haben bei Zuschaltung keinen Schlupf und somit keine Differenzdrehzahl auf der Lagerstelle. Es ist auch allgemein bekannt, dass dies durch die fehlende Abrollung der Wälzkörper zu einem erhöhten Verschleiß und damit zu einer erhöhten Abnutzung bis zum möglichen Ausfall der Lagerstellen im Feldeinsatz führen kann. Insbesondere bei einstufigen Reibscheibenkupplungen ist von Nachteil, dass diese im zugeschalteten (eingekuppelten bzw. verbundenen) Zustand bei hohen Antriebsdrehzahlen oftmals unerwünscht hohe Abtriebsdrehzahlen zur Verfügung stellen und starke Schaltstöße auftreten.

Anstelle der zuvor beschriebenen Reibscheibenkupplungen werden zum Antreiben von Nebenaggregaten von Kraftfahrzeugen so genannte Flüssigkeitsreibungskupplungen, auch Viskokupplung oder Viskositätskupplung genannt, eingesetzt. Bei Viskokupplungen wird eine Drehbewegung von einer Primärseite auf ein Fluid übertragen und von diesem dann auf eine Sekundärseite der Kupplung. Hinsichtlich eines möglichen Aufbaus von Fluidreibungskupplungen wird auf die US 4,305,491, die EP 1 248 007 B1 sowie die DE 699 11 479 T2 verwiesen. Die meisten im kommerziellen Einsatz befindlichen Flüssigkeitsreibungskupplungen umfassen ein hydraulisches Steuerventil, mit dem der Schlupf der Flüssigkeitsreibungskupplung einstellbar ist. Bei einfachen Ausführungsvarianten wird der Öffnungsquerschnitt des Steuerventils über ein temperaturerfassendes Bimetallelement eingestellt. Daneben sind als Elektromagnetventil ausgebildete Steuerventile bekannt, die den Fluidstrom zwischen einer Speicherkammer und einer Arbeitskammer und damit den Schlupf der Flüssigkeitsreibungskupplung steuern. Grundsätzlich ist es bekannt, die hydraulischen Steuerventile als Proportionalventile auszubilden oder alternativ als getaktet betriebene Diskretventile, bei denen die Durchflussmenge abhängig von dem Verhältnis des geöffneten Zeitanteils zu dem geschlossenen Zeitanteil des Ankers ist.

Im Gegensatz zu einstufigen Reibscheibenkupplungen haben Flüssigkeitsreibungskupplungen ein träges Ansprechverhalten und sind mit hohen Schlupfwerten behaftet. Ausgehend von dem vorgenannten Stand der Technik, liegt der Erfindung die Aufgabe zugrunde eine alternative Kupplungsanordnung anzugeben, die sich durch einen geringeren Verschleiß der Reibscheibenkupplung auszeichnet. Insbesondere soll die Kupplungsanordnung mit möglichst wenig funktionalen Komponenten auskommen. Insbesondere soll sich die Kupplungsanordnung durch eine komfortable Ansteuerbarkeit auszeichnen. Bevorzugt soll eine variable Drehzahleinstellung über einen großen Bereich gewährleistet werden sowie gute Dämpfungseigenschaften und ein schnelles Ansprechverhalten, bevorzugt bei voller Durchschaltmöglichkeit. Ferner besteht die Aufgabe darin, ein vereinfachtes Ansteuerverfahren für eine derartige Kupplungsanordnung anzugeben.

Aus der JP 54 111027 A ist eine Kupplungsanordnung zum Übertragen eines Antriebsdrehmomentes von einer Antriebswelle auf ein Nebenaggregat eines Kraftfahrzeugs bekannt, umfassend eine Antriebswelle, einen Abtrieb sowie eine mittels einer Elektromagnetanordnung schaltbare Reibscheibenkupplung, wobei die Kupplungsanordnung zusätzlich zu der Reibscheibenkupplung zur Drehmomentübertragung von der Antriebswelle auf den Abtrieb einer Flüssigkeitsreibungskupplung umfasst. Die Flüssigkeitsreibungskupplung umfasst ein hydraulisches Steuerventil, welches mit einem Bimetall betätigbar ist.

Zum weiteren Stand der Technik wird die DE 89 08 357 U1 genannt, die eine Flüssigkeitsreibungskupplung zeigt. Die WO 2004/007923 A1 beschreibt eine Vorrichtung zum Antreiben einer Kühlmittelpumpe, umfassend eine Flüssigkeitsreibungskupplung sowie eine als Elektromagnetkupplung ausgebildete Schaltkupplung, die parallel zur Flüssigkeitsreibungskupplung in den Antriebsstrang schaltbar ist.

Diese Aufgabe wird mit einer Kupplungsanordnung mit den Merkmalen des Patentanspruchs 1 gelöst, insbesondere dadurch, dass die Kupplungsanordnung zusätzlich zu der Reibscheibenkupplung zur Drehmomentübertragung von der Antriebswelle auf den Abtrieb einer Flüssigkeitsreibungskupplung umfasst, deren hydraulisches Steuerventil (Elektromagnetventil) zur Einstellung des Schlupfes mittels der Elektromagnetanordnung der Reibscheibenkupplung ansteuerbar ist.

Hinsichtlich des Verfahrens wird die Aufgabe mit den Merkmalen des Anspruchs 14 gelöst.

Weitere Vorteile, Merkmale und Einzelheiten der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, bei einer eine elektromagnetisch aktuierbare Reibscheibenkupplung sowie eine elektromagnetisch aktuierbare Flüssigkeitsreibungskupplung (Viskokupplung) umfassenden Kupplungsanordnung der Reibscheibenkupplung und der Flüssigkeitsreibungskupplung eine gemeinsame Elektromagnetanordnung zuzuordnen, mit der sowohl die Reibscheibenkupplung schaltbar, d.h. ein- oder auskuppelbar ist, als auch das hydraulische Steuerventil der Flüssigkeitsreibungskupplung verstellbar ist. Anders ausgedrückt ist bei der erfindungsgemäßen Kupplungsanordnung eine Elektromagnetanordnung derart ausgebildet und angeordnet, dass diese, vorzugsweise in Abhängigkeit von deren effektiver Bestromung die Reibscheibenkupplung schaltet sowie das hydraulische Steuerventil der Flüssigkeitsreibungskupplung ansteuert bzw. verstellt, um somit die zur Drehmomentübertragung in der Flüssigkeitsreibungskupplung zwischen Primär- und Sekundärseite der Flüssigkeitsreibungskupplung zur Verfügung stehende Flüssigkeitsmenge insbesondere Ölmenge einzustellen. Noch anders ausgedrückt ist eine gemeinsame Elektromagnetanordnung für die Reibscheibenkupplung und die Flüssigkeitsreibungskupplung vorgesehen, mit der sowohl ein Anker der Reibscheibenkupplung als auch ein dem Steuerventil der Flüssigkeitsreibungskupplung zugeordneter Anker zur Einstellung des Schlupfes der Flüssigkeitsreibungskupplung betätigbar ist. Der Elektromagnetanordnung können dabei gemäß einer ersten Ausführungsform zwei magnetische Flusskreise zugeordnet werden, bzw. werden von dieser erzeugt, wobei ein erster Flusskreis zur Betätigung des vorzugsweise als Reibscheibe ausgebildeten oder eine Reibscheibe tragenden Ankers der Reibscheibenkupplung dient und der zweite magnetische Flusskreis zur Verstellung des Ankers des elektromagnetisch betätigbaren hydraulischen Steuerventils zur Einstellung des Schlupfes der Flüssigkeitsreibungskupplung. Durch das Vorsehen einer gemeinsamen Elektromagnetanordnung kann auf eine separate Elektromagnetanordnung zur separaten Schaltung bzw. Ansteuerung der Reibscheibenkupplung und zur Schaltung bzw. Ansteuerung der Flüssigkeitsreibungskupplung verzichtet werden. Alternativ ist eine Ausführung mit einem einzigen Magnetkreis realisierbar, insbesondere dann, wenn zum Verstellen des Hydraulikventils der Viskosekupplung ein Drehanker vorgesehen wird, wobei bei einer solchen Ausführung der Magnetkreis vorzugsweise zunächst durch den Anker und den Rotor der Reibscheibenkupplung und dann durch das, insbesondere als Drehanker ausgebildeten, Anker der Fluidreibungskupplung verläuft. Selbstverständlich ist es auch möglich, anders ausgebildete Anker, wie Schiebeanker mit einem einzigen Flusskreis anzusteuern. Im Falle der Realisierung eines einzigen Flusskreises, muss dieser also die Luftspalte bzw. Arbeitsspalte beider Anker (Reibscheibenkupplungsanker sowie Viskokupplungsanker) überbrücken.

Neben der vorgenannten Doppelfunktion der, vorzugsweise einzigen, Elektromagnetanordnung der erfindungsgemäßen Kupplungsanordnung, hat diese weitere Vorteile. So umfasst die erfindungsgemäße Kupplungsanordnung, wie vorerwähnt, neben einer ein- oder mehrstufig ausgebildeten elektromagnetisch ansteuerbaren Reibscheibenkupplung in einem gemeinsamen Antriebsstrang für eine Nebenaggregat eine Flüssigkeitsreibungskupplung, um das Drehmoment von der Antriebswelle auf das Nebenaggregat, insbesondere ein Lüfterrad eines Kraftfahrzeugs, vorzugsweise zur Kühlung des Verbrennungsmotors zu übertragen. Die Erfindung nimmt also bewusst einen auf den ersten Blick komplexeren und kostenintensiveren Aufbau einer Kupplungsanordnung in Kauf, um dann überraschend die Vorteile einer an sich bekannten Reibscheibenkupplung einerseits und einer an sich bekannten Flüssigkeitsreibungskupplung andererseits miteinander zu kombinieren, wobei der zunächst komplexe anmutende Aufbau dadurch erfindungsgemäß, wesentlich vereinfacht und kostengünstiger ausgeführt wird, dass eine gemeinsame Elektromagnetkupplung zur Betätigung Reibscheibenkupplung und der Flüssigkeitsreibungskupplung vorgesehen ist. Durch die Kombination der Reibscheibenkupplungstechnologie mit der Flüssigkeitsreibungstechnologie in einer gemeinsamen Kupplungsanordnung kann ein gedämpftes (sanftes) Zuschalten der Reibscheibenkupplung realisiert werden, woraus ein geringerer Verschleiß der Reibscheibenkupplung insbesondere der Reibscheibe der Reibscheibenkupplung resultiert. Ferner resultiert aus der Kombination von Reibscheibenkupplung und Flüssigkeitsreibungskupplung eine geringere Belastung eines fakultativ am Abtrieb vorgesehenen Riementriebs. Darüber hinaus kann aufgrund einer möglichen Abriegelung der Energieverbrauch bei hohen Motordrehzahlen reduziert werden. Auch wird aufgrund der Kombination eine Dämpfung von Torsionsschwingungen erreicht, wodurch die erfindungemäße Kupplungsanordnung kurbelwellentauglich wird. Ganz besonders bevorzugt ist die Kupplungsanordnung derart ausgelegt, dass in einem unteren Drehzahlbereich, vorzugsweise zwischen etwa 10% und 85% der maximalen Drehzahl das Nebenaggregat ausschließlich über die Flüssigkeitsreibungskupplung betrieben wird, wobei das übertragende Drehmoment, durch eine entsprechende Ansteuerung des hydraulischen Steuerventils mit der gemeinsamen Elektromagnetanordnung modulierbar ist. Die Reibscheibenkupplung kann dann zugeschaltet werden, wenn ein hoher Kühlbedarf besteht, wobei sich die Reibscheibenkupplung durch eine schnelle Zuschaltbarkeit auszeichnet.

In Weiterbildung der Erfindung ist mit Vorteil vorgesehen, dass die Flüssigkeitsreibungskupplung und die Reibscheibenkupplung parallel angeordnet sind, also derart, dass der Kraftfluss bei Entkupplung (Auskupplung) einer der beiden Kupplungen, insbesondere der Reibscheibenkupplung von der Antriebswelle zum Abtrieb über die andere Kupplung, insbesondere die Flüssigkeitsreibungskupplung verläuft. Wird die Reibscheibenkupplung vom Abtrieb entkuppelt, kann also das Drehmoment bei bevorzugt paralleler Anordnung ausschließlich über die Flüssigkeitsreibungskupplung von der Antriebswelle zum Abtrieb übertragen werden. Wie eingangs erwähnt erfolgt die Drehmomentübertragung vorzugsweise ausschließlich über die Flüssigkeitsreibungskupplung in einem unteren Last- bzw. Drehzahlbereich, insbesondere dann, wenn nicht die maximale Kühllast angefordert wird.

Ganz besonders bevorzugt ist eine vorteilhafte Ausgestaltung der Erfindung nach welcher die Flüssigkeitsreibungskupplung mittels der Reibscheibenkupplung überbrückbar ist. Mit anderen Worten sind die Flüssigkeitsreibungskupplung und die Reibscheibenkupplung vorzugsweise derart angeordnet bzw. wirdken derart miteinander zusammen, dass bei eingekuppelter Reibscheibenkupplung eine schlupffreie Drehmomentübertragung von der Antriebswelle auf den Abtrieb möglich ist. Hierdurch kann schlupffrei das Drehmoment übertragen werden, was insbesondere bei hohen Kühllasten von Vorteil ist.

Ganz besonders zweckmäßig ist es, wenn der Abtrieb der Kupplungsanordnung von der Sekundärseite (Abtriebsseite) der Flüssigkeitsreibungskupplung gebildet ist, oder wenn der Abtrieb der Kupplungsanordnung, vorzugsweise schlupffrei, insbesondere über eine Gelenkwelle, mit der Sekundärseite der Flüssigkeitsreibungskupplung gekoppelt, d.h. wirkverbunden ist. Bevorzugt ist die Sekundärseite der Flüssigkeitsreibungskupplung relativ drehbar zur Antriebswelle gelagert, wobei bei ausgekuppelter Reibscheibenkupplung das Drehmoment mittels der Flüssigkeitsreibungskupplung bevorzugt ausschließlich über die Flüssigkeit, insbesondere ein Öl, in der Flüssigkeitsreibungskupplung von der Primärseite auf die Sekundärseite übertragen wird, wobei wie eingangs erwähnt, die zur Drehmomentübertragung zur Verfügung stehende Flüssigkeitsmenge zwischen Sekundärseite und Primärseite in an sich bekannter Weise über das hydraulische Steuerventil einstellbar ist, wobei jedoch erfindungsgemäß das hydraulische Steuerventil mittels der gemeinsamen Elektromagnetanordnung ansteuerbar ist. Die Primärseite der Flüssigkeitsreibungskupplung ist bevorzugt dauerhaft fest mit der Antriebswelle verbunden. Ganz besonderes bevorzugt ist der Rotor der Flüssigkeitsreibungskupplung am freien Ende der Antriebswelle festgelegt.

Ganz besonders bevorzugt ist es, wenn die Sekundärseite der Flüssigkeitsreibungskupplung über die Reibscheibenkupplung reibschlüssig drehmomentübertragend mit der Antriebswelle verbindbar ist. Bevorzugt ist der Sekundärseite der Flüssigkeitsreibungskupplung hierzu ein Rotor der Reibscheibenkupplung zugeordnet, wobei die Sekundärseite der Flüssigkeitsreibungskupplung, insbesondere über einen axial verstellbaren Anker reibschlüssig mit diesem Rotor verbindbar ist. In diesem Fall wird, insbesondere für den Fall der Ausbildung der Reibscheibenkupplung als einstufige Kupplung der Flüssigreibungsdrehmornentübertragungsmechanismus der Flüssigkeitsreibscheibenkupplung überbrückt, da die Sekundärseite der Flüssigkeitsreibungskupplung unmittelbar von der Reibscheibenkupplung angetrieben wird, welche bevorzugt, insbesondere im Falle der Ausbildung der Reibscheibenkupplung als einstufige Kupplung, mit Antriebswellendrehzahl dreht.

Ganz besonders bevorzugt ist eine Ausführungsvariante, bei welcher der Rotor der Reibscheibenkupplung axial zwischen der gemeinsamen Elektromagnetanordnung und der Flüssigkeitsreibungskupplung insbesondere der Sekundärseite der Flüssigkeitsreibungskupplung angeordnet ist, wobei der erste magnetische Flusskreis von der Elektromagnetanordnung in den Rotor eingeleitet wird und (bei ausreichender effektiver .Bestromung der Elektromagnetanordnung) über einen vorzugsweise mit Luft gefüllten Spalt (Arbeitsluftspalt) zum mit der Sekundärseite der Flüssigkeitsreibungskupplung verbundenen Anker geführt wird.. Bevorzugt sind hier zumindestens zwei in radialer Richtung beabstandete Abschnitte des Rotors über eine magnetische Trennung miteinander verbunden, bzw. magnetisch getrennt, um einen magnetischen Kurzschluss zu vermeiden.

Besonders bevorzugt ist in Weiterbildung der Erfindung mit Vorteil vorgesehen, dass der vorerwähnte Anker der Reibscheibenkupplung über Rückstellmittel, insbesondere eine Rückstellfeder, an der Sekundärseite der Flüssigkeitsreibungskupplung festgelegt ist. Besonders zweckmäßig ist es, wenn es sich bei dem Rückstellmittel um eine den Anker von dem Rotor in Richtung Sekundärseite der Flüssigkeitsreibungskupplung wegziehende, d.h. entkuppelnde, Feder handelt, wobei es selbstverständlich auch möglich ist bei einer alternativen Ausführungsvariante die Feder als Druckfeder auszubilden, um die Reibscheibenkupplung in diesem Fall im nicht bestromten Zustand geschlossen, d.h. eingekuppelt, zu halten. Die Reibscheibenkupplung kann also sowohl als im bestromten Zustand eingekuppelte als auch alternativ im bestromten Zustand ausgekuppelte, d.h. als ausfallsichere, Kupplung realisiert werden.

Im Hinblick auf die Ausführung des Ankers der Reibscheibenkupplung gibt es unterschiedliche Möglichkeiten. Gemäß einer ersten, bevorzugten Alternative bildet der Anker gleichzeitig unmittelbar eine Reibscheibe zum reibschlüssigen Zusammenwirken mit dem Rotor. Bei einer alternativen Ausgestaltungsvariante trägt der Anker eine Reibscheibe, welche mittels des Ankers axial verstellbar ist, um reibschlüssig mit dem Rotor der Reibscheibenkupplung zusammenzuwirken.

Besonders zweckmäßig ist es, wenn die Reibscheibenkupplung als einfache einstufige Kupplung ausgebildet ist, also als eine Kupplung, die entweder das volle Drehmoment oder kein Drehmoment überträgt, wobei es selbstverständlich auch möglich ist, eine zwei- drei- oder noch mehrstufige Kupplung als Reibscheibenkupplung vorzusehen, beispielsweise eine die in der DE 20 2007 004 786 U1 beschriebene Reibscheibenkupplung, wobei es besonders zweckmäßig ist, wenn im Falle der Ausbildung der Kupplung als mehrstufige Kupplung Wirbelstrommittel zum Erzeugen eines Wirbelstroms zum Zwecke des Mitschleppens bzw. eines Kupplungsteiles, d.h. zum Erzeugen eines Schlupfes vorgesehen sind.

Um die Reibscheibenkupplung und die Flüssigkeitsreibungskupplung optimal, d.h. vorzugsweise separat voneinander mittels der Elektromagnetanordnung ansteuern zu können, ist in Weiterbildung der Erfindung vorgesehen, dass der Anker der Reibscheibenkupplung durch Bestromen der Elektromagnetanordnung mit einer ersten Stromstärke schaltbar ist, dass also bei Über- oder Unterschreiten der ersten effektiven Stromstärke (Schwellwert) die Reibscheibenkupplung geschaltet wird und dass durch Bestromen der gemeinsamen Elektromagnetanordnung mit einer von der ersten Stromstärke unterschiedlichen zweiten effektiven Stromstärke der Anker des hydraulischen Steuerventils der Flüssigkeitsreibungskupplung zur Einstellung des Schlupfes verstellt wird. Besonders bevorzugt ist es, wenn die Durchflussmenge des Steuerventils gestuft oder stufenlos einstellbar ist, so dass durch eine entsprechende Bestromung der Elektromagnetanordnung mehr als zwei unterschiedliche Schlupfwerte der Flüssigkeitsreibungskupplung realisierbar sind. Grundsätzlich ist es denkbar, dass die zweite effektive Stromstärke zur Einstellung einer gewünschten Durchflussmenge durch das Steuerventil und damit zur Einstellung einer zur Drehmomentübertragung zur Verfügung stehenden Flüssigkeitsmenge größer ist als die erste effektive Stromstärke. Besonders bevorzugt ist jedoch eine Ausführungsvariante, bei der die erste Stromstärke, insbesondere deutlich, größer ist als die mindestens eine zweite effektive Stromstärke, um somit durch Bestromung der Elektromagnetanordnung in einem ersten, insbesondere höheren Bestromungsbereich (Stromstärkenbereich) die Reibscheibenkupplung zu schalten und durch Bestromung in einem zweiten, vorzugsweise niedrigeren Bestromungsbereich (Stromstärkenbereich) die Flüssigkeitsreibungskupplung, genauer deren hydraulisches Steuerventil einzustellen, um damit unterschiedliche Durchflussmengen und damit Schlupfwerte einstellen zu können.

Unter einer effektiven Stromstärke wird dabei die flussrelevante Stromstärke verstanden, also die Stromstärke der Elektromagnetanordnungsbestromung, die zur Erzeugung des magnetischen Feldes zur Verfügung steht bzw. zu der das erzeugte magnetische Feld bzw. der erzeugte magnetische Fluss in einem funktionalen Zusammenhang steht. Wird die Elektromagnetanordnung beispielsweise mit konstanten Gleichströmen bestromt, so ist unter der effektiven Stromstärke diese jeweils konstante Stromstärke (nicht gepulste Ströme) zu verstehen. Wird die Elektromagnetanordnung beispielsweise mit einem PWM-Signal bestromt, so ist unter der effektiven Stromstärke die resultierende bzw. in einem bestimmten Zeitintervall, insbesondere in einer Periode, mittlere Stromstärke zu verstehen. Wie zuvor erwähnt ist es besonders bevorzugt, wenn die Flüssigkeitsreibungskupplung nicht ausschließlich zwei Schaltzustände kennt bzw. aufweist, sondern wenn die Durchflussmenge durch die Flüssigkeitsreibungskupplung in mehreren Stufen oder kontinuierlich einstellbar ist, um eine besonders gute Modulation des Schlupfes der Flüssigkeitsreibungskupplung zu ermöglichen. Dies kann dadurch realisiert werden, dass die Elektromagnetanordnung mit unterschiedlichen zweiten effektiven Stromstärken aus einem zweiten Bestromungsbereich bestrombar ist, welcher vorzugsweise niedriger ist als ein erster Bestromungsbereich, in dem die erste effektive Stromstärke (Schwellwert) zur Betätigung der Reibscheibenkupplung angeordnet ist. Die unterschiedlichen effektiven Stromstärken können durch Bestromen mit unterschiedlichen PWM-Tastverhältnissen eingestellt werden oder durch unterschiedlich hohe Konstantströme (nicht gepulste Ströme). Unter dem PWM-Tastverhältnis wird das Verhältnis in einer Periode zwischen dem Zeitanteil in dem der Strom eingeschaltet ist zu dem Zeitanteil verstanden in dem der Strom ausgeschaltet ist. Beträgt die PWM-Frequenz z. B. 1 Hz, beträgt die zu berücksichtigende Zeit (Periodendauer) 1 s; 60 % PWM bedeutet dann 0,6 s Strom ein und 0,4 s Strom aus. Beträgt die Frequenz 5 Hz, beträgt die zu betrachtende Zeit (Periodendauer) 0,2 s; 60 % PWM bedeuten hier 0,12 s Strom ein und 0,08 s Strom aus. Die effektive Stromstärke ist bei beiden vorgenannten Beispielen gleich, lediglich die Zeitbasis, d. h. die Periodendauer (Zeit zwischen zwei ansteigenden Pulsflanken) ist unterschiedlich. Die vorerwähnten Bestromungweisen bieten sich beispielsweise an, wenn das hydraulische Steuerventil als so genanntes Proportionalventil ausgebildet ist, bei welchem die Durchflussmenge über den einstellbaren Durchflussquerschnitt eingestellt wird. Für den Fall, dass das Proportionalventil PWM - bestromt wird, sollte eine vergleichsweise hohe PWM-Frequenz gewählt werden, z. B. 400 Hz. Im Falle des Einsatzes eines so genannten Diskretventils als hydraulisches Steuerventil, also eines getaktet betriebenen (schnellalternierend öffnenden und schließenden) Ventils kann die Bestromung alternativ mittels eines an- und abzuschaltenden Konstantstromes (nicht gepulst) oder mittels eines PWM-Signals (gepulster Strom) erfolgen, wobei die PWM-Frequenz bevorzugt gering ist, z.B. 1 Hz.

Wie zuvor erwähnt ist es denkbar, dass mehrere effektive (unterschiedliche) zweite Stromstärken zur Einstellung unterschiedlicher Durchflussmengen im Steuerventil höher sind als eine erste effektive Stromstärke, insbesondere ein Schwellwert zum Schalten der Reibscheibenkupplung. Bevorzugt ist jedoch eine Ausführungsvariante, bei der die erste effektive Stromstärke, ab deren Erreichen die Reibscheibenkupplung geöffnet oder geschlossen wird, größer ist als die vorerwähnten zweiten Stromstärken. Anders ausgedrückt sind die effektiven zweiten effektiven Stromstärken zum Einstellen unterschiedlicher Durchflussmengen im hydraulischen Steuerventil in einem zweiten Bestromungsbereich angesiedelt angeordnet und die erste effektive Stromstärke bei deren Überoder Unterschreiten eine Betätigung des Ankers der Reibschreibenkupplung resultiert bzw. ein Schalten der Reibscheibenkupplung resultiert in einem ersten Bestromungsbereich, wobei es besonders bevorzugt ist, wenn der erste Bestromungsbereich (Stromstärkenbereich) höher ist als der zweite Bestromungsbereich.

Ganz besonders bevorzugt ist eine Ausführungsvariante, bei der die Reibscheibenkupplung bei Erreichen und Überschreiten der ersten effektiven Stromstärke geschaltet wird und bei zunehmender effektiver zweiter Stromstärke oder zunehmendem Tastverhältnis der Elektromagnetanordnungsbestromung der Schlupf der Flüssigkeitsreibungskupplung zunimmt. Anders ausgedrückt ist der Schlupf umso höher, je höher die zweite effektive Stromstärke ist. Bei dieser Variante handelt es sich um eine so genannte ausfallsichere Ausführungsform (fail-safe), da bei fehlender Bestromung die maximal mit der Viskokupplung mögliche Drehzahl (geringster Schlupf) übertragen wird. Alternativ kann das Steuerventil so ausgebildet und angeordnet werden, dass der Schlupf umso größer wird, je geringer die zweite effektive Stromstärke ist.

Besonders zweckmäßig ist es, wenn das hydraulische Steuerventil der Fluidreibungskupplung bei Bestromung der Elektromagnetanordnung mit (mindestens) der ersten effektiven Stromstärke geschlossen ist.

Im Hinblick auf die Erzeugung der ersten und zweiten effektiven Stromstärke gibt es, wie zuvor erwähnt, unterschiedliche Möglichkeiten. Ganz besonders bevorzugt ist es, die unterschiedlichen effektiven Stromstärken mit Hilfe unterschiedlicher PWM-Signale bzw. mit unterschiedlichen Tastverhältnissen durch den Einsatz von PWM-Mitteln zu erzeugen. Alternativ können Stromkreisregelmittel vorgesehen sein, mit denen mehr oder weniger konstante, d. h. nicht gepulste, bzw. nicht modulierte Ströme bereitstellbar sind.

Im Hinblick auf die Ausbildung des Ankers des hydraulischen Steuerventils, welcher durch Bestromen der Elektromagnetanordnung mit mindestens einer zweiten effektiven Stromstärke verstellbar ist, gibt es unterschiedliche Möglichkeiten. So ist es denkbar als Anker einen translatorisch verstellbaren Anker vorzusehen, oder einen verschwenkbaren Anker (Klappanker) Auch ist es denkbar einen rotatorisch verstellbaren Anker (Rotationsanker) vorzusehen, welcher noch weiter bevorzugt in der Antriebswelle angeordnet ist.

Die Erfindung führt auch auf ein Verfahren zum Ansteuern einer erfindungsgemäßen, zuvor im Detail erläuterten Kupplungsanordnung. Das Verfahren zeichnet sich dadurch aus, dass diese Kupplungsanordnung zusätzlich zu der Reibscheibenkupplung zur Drehmomentübertragung von der Antriebswelle auf den Abtrieb eine Flüssigkeitsreibungskupplung umfasst, deren hydraulisches Steuerventil zur Einstellung des Schlupfes mittels der (gemeinsamen) Elektromagnetanordnung für die Reibscheibenkupplung und die Flüssigkeitsreibungskupplung angesteuert wird. Bevorzugt erfolgt die Ansteuerung, wie zuvor im Zusammenhang mit der Beschreibung der Vorrichtung bzw. der Anordnung erläutert durch Bestromen mit unterschiedlichen effektiven Stromstärken, insbesondere um durch Über- oder Unterschreiten einer ersten effektiven Stromstärke die Reibscheibenkupplung zu schalten und durch Bestromen mit zweiten effektiven Stromstärken oder durch Bestromen mit unterschiedlichen Tastverhältnissen die Durchflussmenge durch das hydraulische Steuerventil der Flüssigkeitsreibungskupplung einzustellen, um somit die zur Drehmomentübertragung zur Verfügung stehende Flüssigkeitsmenge zu regulieren um schlussendlich hierdurch den Schlupf der Flüssigkeitsreibungskupplung zu beeinflussen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

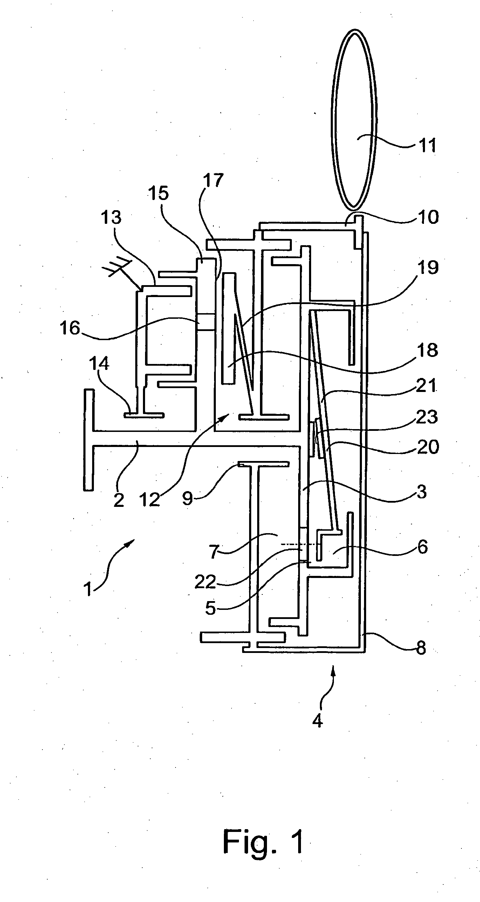

- Fig. 1:: eine schematische Darstellung einer Kupplungsanordnung, die neben einer als Elektromagnetkupplung ausgebildeten, einstufigen (alternativ mehrstufigen) Reibscheibenkupplung eine variable, ein elektromagnetisch betätigbares Steuerventil umfassende Flüssigkeitsreibungskupplung zur Drehmomentübertragung des Drehmoments von einer Antriebswelle auf ein Nebenaggregat, hier ein Lüfterrad einer Verbrennungsmotorkühlung umfasst, wobei die Reibscheibenkupplung und die Flüssigkeitsreibungskupplung parallel angeordnet sind,

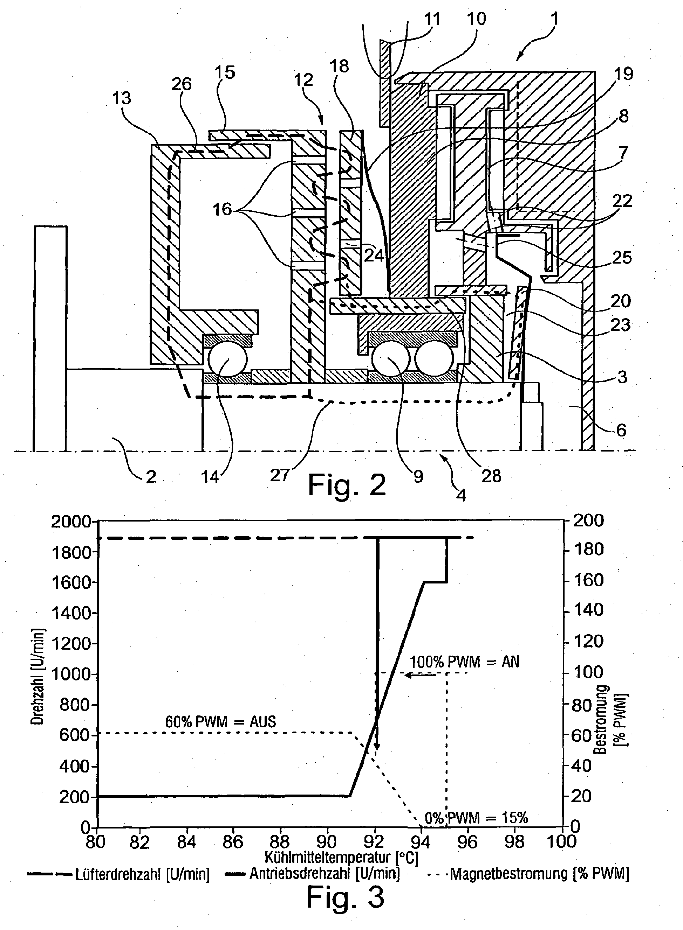

- Fig. 2:: eine ausschnittsweise Darstellung einer möglichen Ausführungsvariante einer Kupplungsanordnung, wobei aus der Darstellung zwei magnetische Flusskreise ersichtlich sind, wobei ein erster Flusskreis zur Betätigung eines Ankers einer Reibscheibenkupplung und ein zweiter Flusskreis zur Betätigung eines Ankers eines hydraulischen Steuerventils einer Flüssigkeitsreibungskupplung umfasst,
- Fig. 3:: ein Diagramm für eine mögliche Ansteuerung einer Kupplungsanordnung mit einer gemeinsamen Elektromagnetanordnung für die Reibscheibenkupplung und die Flüssigkeitsreibungskupplung,

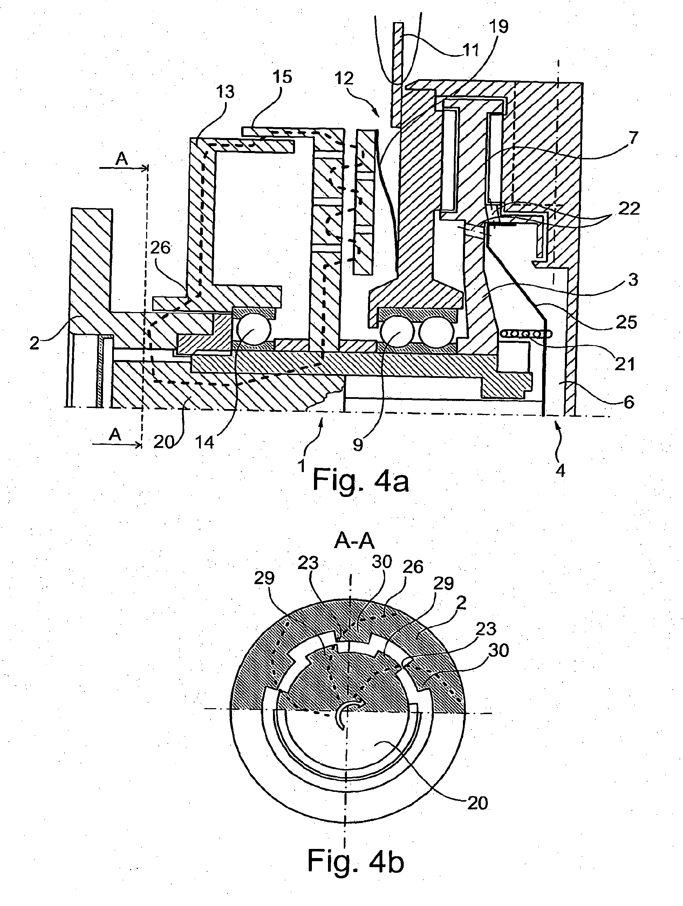

- Fig. 4 a:: eine ausschnittsweise Darstellung einer möglichen Ausführungsvariante einer Kupplungsanordnung, wobei als Anker zur Betätigung des hydraulischen Steuerventils der Flüssigkeitsreibungskupplung ein Drehanker (Rotationsanker) vorgesehen ist, der gemäß einer bevorzugten Ausführung in der Antriebswelle angeordnet ist, und
- Fig. 4 b:: eine Schnittansicht entlang der Schnittlinie A-A gemäß Fig. 4a.

In den Figuren sind gleiche Elemente und Elemente mit der gleichen Funktion mit den gleichen Bezugszeichen gekennzeichnet.

In Fig. 1 ist stark schematisiert ein Ausführungsbeispiel einer Kupplungsanordnung 1 gezeigt. Diese umfasst eine von einem nicht dargestellten Verbrennungsmotor angetriebene Antriebswelle 2, an deren freien Ende ein Primärteil 3 (Rotor, Primärseite) einer Flüssigkeitsreibungskupplung 4 (Viskokupplung) drehfest festgelegt ist. Die Flüssigkeitsreibungskupplung 4 umfasst ein hydraulisches Steuerventil 5, welches zur Einstellung des Schlupfes der Flüssigkeitsreibungskupplung 4 dient. Mithilfe des hydraulischen Steuerventils 5 kann die Durchflussmenge bzw. der Durchflussvolumenstrom an Fluid, insbesondere einem Öl zwischen einer Fluidspeicherkammer 6 und einer Arbeitskammer 7 und darüber die zur Drehmomentübertragung in der Arbeitskammer 7 zur Verfügung stehende Menge an Fluid eingestellt werden. Zwischen der Arbeitskammer 7 und dem Fluidspeicher 6 ist ein nicht dargestelltes, allgemein bekanntes Wischer- oder Pumpenelement vorgesehen, welches bei Rotation des Primärteils 3 das Drehmomentübertragungsfluid aus der Arbeitskammer 7 zurück in die Fluidspeicherkammer 6 fördert. Durch Ansteuerung des hydraulischen Steuerventils 5 wird also quasi der Rückstrom an Fluid in die Arbeitskammer 7 und damit der Schlupf der Flüssigkeitsreibungskupplung 4 beeinflusst.

In der Arbeitskammer 7 befindet sich das Fluid zwischen dem Primärteil 3 (Primärseite) und einem Sekundärteil 8 (Sekundärseite) der Flüssigkeitsreibungskupplung und wird durch Rotation des Primärteils 3, welches mit Antriebswellendrehzahl dreht geschert und überträgt dadurch das Drehmoment auf das Sekundärteil 8, welches mit Schlupf dem Primärteil 3 nachläuft.

Das Primärteil 3 rotiert, angetrieben von der Antriebswelle 2 relativ zu dem vorerwähnten Sekundärteil 8 der Flüssigkeitsreibungskupplung 4, wobei das Sekundärteil 8 von einem Gehäuse der Flüssigkeitsreibungskupplung 4 gebildet ist, welches über ein Lager 9 drehbar auf der Antriebswelle 2 gelagert ist. Die Drehmomentübertragung zwischen dem Primärteil 3 und dem Sekundärteil 8 erfolgt, wie zuvor erwähnt über die in der Arbeitskammer 7 vorgesehene Flüssigkeit, wobei die zur Drehmomentübertragung zur Verfügung stehende Flüssigkeitsmenge in der Arbeitskammer 7 temperaturabhängig gesteuert mithilfe des hydraulischen Steuerventils 5 einstellbar ist.

In dem gezeigten Ausführungsbeispiel bildet die Sekundärseite 8 (Sekundärteil) der Flüssigkeitsreibungskupplung 4 gleichzeitig den (gemeinsamen) Abtrieb 10, wobei am Abtrieb 10 ein schematisch angedeutetes Lüfterrad 11 vorgesehen ist. Anstelle des Vorsehens einer Lüfterrads 11 kann die Sekundärseite 8, vorzugsweise schlupffrei, beispielsweise über eine Gelenkwelle mit einem Abtrieb verbunden sein. Auch ist es denkbar als Abtrieb beispielsweise eine Riemenscheibe vorzusehen, über die dann mittels eines Riementriebes ein Nebenaggregat, beispielsweise ein Lüfterrad antreibbar ist.

Ferner umfasst die Kupplungsanordnung 1 eine als Elektromagnetkupplung ausgebildete Reibscheibenkupplung 12, welche in dem gezeigten Ausführungsbeispiel mit der Flüssigkeitsreibungskupplung 4 parallel angeordnet ist. Die Kupplungsanordnung 1 umfasst eine stationäre, bestrombare Elektromagnetanordnung 13, welche sowohl zum Schalten der Reibscheibenkupplung12 als auch zum Betätigen des hydraulischen Steuerventils 5 dient. Die Elektromagnetanordnung 13 ist relativ zu der Antriebswelle 2 über ein (weiteres) Lager 14 drehbar gelagert.

Axial zwischen der Elektromagnetanordnung 13 und dem Sekundärteil 8 der Flüssigkeitsreibungskupplung 4 ist ein drehfest mit der Antriebswelle 2 verbundener Rotor 15 der Reibscheibenkupplung 12 angeordnet, der mit Antriebswellendrehzahl dreht. In dem gezeigten Ausführungsbeispiel übergreift der Rotor 15 die Elektromagnetanordnung 13 in axialer Richtung, um somit eine verbesserte Einkupplung (Einspeisung) des magnetischen Flusses zu erreichen. Zu erkennen ist eine schematisch dargestellte magnetische Trennung 16 in Form eines Ringes an einem nicht magnetischen Material, welcher den magnetischen Fluss über einen ggf. mit Öl gefüllten Arbeitsluftspalt 17 in einen Anker 18 (Ankerscheibe) der Reibscheibenkupplung 12 zwingt. Der Anker 18 ist in dem gezeigten Ausführungsbeispiel über Rückstellmittel 19 in Form einer Rückstellfeder fest verbunden mit dem Sekundärteil 8 der Flüssigkeitsreibungskupplung 4. Der Anker 18 kann eine Reibscheibe tragen (nicht dargestellt) oder selbst als Reibscheibe zum reibschlüssigen Zusammenwirken mit dem Rotor 15 bei Bestromung der Elektromagnetanordnung 13 dienen. Wenn der Anker 18 durch Bestromung der Elektromagnetanordnung 13 am Rotor 15 anliegt, ist der Flüssigkeitsreibungsdrehmoment-Übertragungsmechanismus der Flüssigkeitsreibungskupplung 4 bzw. ist die Flüssigkeitsreibungskupplung 4 überbrückt und die Sekundärseite 8 der Flüssigkeitsreibungskupplung 4 wird von der Reibscheibenkupplung 12 vorgegebenen Drehzahl, bei einer einstufigen Kupplung immer der Antriebswellendrehzahl, angetrieben.

Die gezeigte Kupplungsanordnung 1 wird bevorzugt derart betrieben, dass in einem unteren Abtriebsdrehzahlbereich die Reibscheibenkupplung 12 ausgekuppelt ist. In diesem Zustand erfolgt die Drehmomentübertragung von der Antriebswelle 3 auf den Abtrieb 8 ausschließlich über die Flüssigkeitsreibungskupplung 4 durch Scherung des Fluids in der Arbeitskammer 7 der Flüssigkeitsreibungskupplung 4 zwischen Primärteil 3 und Sekundärteil 8. Der Schlupf der Flüssigkeitsreibungskupplung 4 ist einstellbar über die zur Drehmomentübertragung zur Verfügung stehende Flüssigkeitsmenge in der Arbeitskammer 7, welche wiederum über das hydraulische Steuerventil 5, vorzugsweise temperaturabhängig einstellbar ist. Bei höherem Kühlbedarf kann die Reibscheibenkupplung 12 eingekuppelt werden. In dem gezeigten Ausführungsbeispiel wird hierzu die Elektromagnetanordnung, wie später noch erläutert werden wird mit mindestens einer ersten effektiven Stromstärke bestromt, wodurch der Anker 18 entgegen der Federkraft der Rückstellmittel 19 axial gegen den Rotor 15 verstellt wird und mit diesem reibschlüssig zusammenwirkt. In diesem Betriebszustand wird die Sekundärseite 8 der Flüssigkeitsreibungskupplung 4 mit der Drehzahl des Rotors 15 angetrieben oder ggf. mit einer geringeren Drehzahl, falls die Reibscheibenkupplung als mehrstufige Kupplung ausgebildet ist.

Wie in Fig.1 zu erkennen ist, umfasst das hydraulische Steuerventil 5 einen hier lediglich beispielhaft als Klappanker ausgebildeten Anker 20, welcher, in dem gezeigten Ausführungsbeispiel, über ein Federelement 21 (Rückstellelement) am Primärteil 3 festgelegt ist. Durch Bestromen der Elektromagnetanordnung 13 mit unterschiedlichen effektiven zweiten Stromstärken können bei dem, hier als Schaltventil (Diskretventil) (alternativ als Proportionalventil) ausgebildeten Steuerventil 5 unterschiedliche Öffnungsquerschnitte einer Fluidverbindung 22 (Ventilverbindung) eingestellt werden und somit der in die Arbeitskammer 7 zurückströmende Flüssigkeitsvolumenstrom. Der Anker 20 ist dabei so dimensioniert bzw. ausgelegt, dass er sich (bereits) bei geringeren Bestromungsstärken (Stromstärken) der Elektromagnetanordnung 13 verstellen lässt als der Anker 20 der Reibscheibenkupplung 12. Zum Verstellen des Ankers 20 der Flüssigkeitsreibungskupplung 4 überbrückt der magnetische Fluss einen, vorzugsweise mit Öl gefüllten, Arbeitsspalt 23.

In Fig. 2 ist eine weitere Ausführungsvariante einer Kupplungsanordnung 1 gezeigt. Diese umfasst eine gemeinsame, ortsfest angeordnete Elektromagnetanordnung 13, deren Spule aus Übersichtlichkeitsgründen nicht dargestellt ist. Die Elektromagnetanordnung 13 wird axial übergriffen von dem Rotor 15 der Reibscheibenkupplung 12, welche einen axial verstellbaren Anker 18 umfasst. Zu erkennen sind eine Vielzahl von in radialer Richtung beabstandeten magnetischen Trennungen 16 in dem Rotor 15 sowie magnetische Trennungen 24 im Anker 18, um in an sich bekannter Weise den magnetischen Fluss zur Verstärkung der Magnetkraft mehrfach zwischen Rotor 15 und Anker 18 hin- und herzuleiten und um einen magnetischen Kurzschluss zu vermeiden. Der Rotor 15 sitzt drehfest auf der Antriebswelle 2, wohingegen die Antriebswelle 2 relativ zur Elektromagnetanordnung 13 über ein als Wälzlager ausgebildetes Lager 14 rotierbar ist. Der Anker 18 der Reibscheibenkupplung 12 ist über Rückstellmittel 19 am Sekundärteil 8 der Flüssigkeitsreibungskupplung 4 und damit am Abtrieb 10 festgelegt, welcher ein Lüfterrad 11 trägt. Das Sekundärteil 8 ist über das als Wälzlager ausgebildete (weitere) Lager 9 relativ zur Antriebswelle 2 drehbar gelagert, wohingegen das Primärteil 3 der Flüssigkeitsreibungskupplung 4 an der Antriebswelle 2 drehfest festgelegt ist.

Die Flüssigkeitsreibungskupplung 4 umfasst ein hydraulisches Steuerventil 5, welches elektromagnetisch betätigbar ist. Hierzu umfasst das hydraulische Steuerventil 5 einen (Steuerventil-) Anker 20 zur Betätigung eines Ventilelements 25 des Steuerventils 5, wobei das Ventilelement 25 je nach Ausführungsform auch unmittelbar von einem Anker 20 der Flüssigkeitsreibungskupplung gebildet sein kann. Das Ventilelement 25 ist in dem gezeigten Ausführungsbeispiel gleichzeitig als Federelement bzw. Rückstellelement ausgebildet.

Mithilfe des Steuerventils 5 kann der Volumenstrom zwischen einer Fluidspeicherkammer 6 und einer Arbeitskammer 7 und damit der Schlupf der Flüssigkeitsreibungskupplung eingestellt werden. Mithilfe des Ventilelementes 25 kann der Öffnungsquerschnitt mindestens einer, hiervon zwei entsprechenden Fluidverbindungen 22 eingestellt werden. Bei einem getaktet arbeitenden Diskretventil wird der Fluidvolumenstrom nicht durch den freien Strömungsquerschnitt sondern durch das Verhältnis von dem Zeitanteil "geöffnet" zu dem Zeitanteil "geschlossen" eingestellt.

In dem gezeigten Ausführungsbeispiel sind an sich bekannte Pumpmittel zum Fördern von Flüssigkeit aus der Arbeitskammer 7 zurück in die Fluidspeicherkammer 6 nicht gezeigt.

Aus Fig. 2 sind zwei magnetische Flusskreise zu erkennen, nämlich ein erster magnetischer Flusskreis 26 und ein zweiter magnetischer Flusskreis 27.

Der erste magnetische Flusskreis 26 bildet den Hauptflusskreis zum Schalten der Reibscheibenkupplung 12, d.h. zum Betätigen des Ankers 18, wohingegen der zweite magnetische Flusskreis 27 einen Nebenflusskreis bildet und zum Einstellen des Steuerventils 5 dient. Teilweise überdecken sich erster und zweiter Magnetkreis 27. In einem unteren (zweiten) Bestromungsbereich ist in erster Linie der zweite magnetische Flusskreis 27 relevant, da das Steuerventil 5 derart ausgelegt ist, dass auch vergleichsweise niedrige effektive zweite Stromstärken dazu ausreichen den Anker 18 der Flüssigkeitsreibungskupplung 4 zu verstellen. Der magnetische Fluss 27 verläuft dabei von der Elektromagnetanordnung 13 über Rotor 15 und Anker 18 durch flussleitende Bauteile 28 hindurch bis zu einem axial beabstandeten Arbeitsluftspalt 23 der Flüssigkeitsreibungskupplung 4. Um einen magnetischen Kurzschluss zu vermeiden bzw. um den Magnetfluss zu dem Anker 20 der Flüssigkeitsreibungskupplung 4 zu führen und dann über die Antriebswelle 2 zurück zur Elektromagnetanordnung 13 sind die zur Anwendung kommenden Werkstoffe der verschiedenen Komponente bzw. Bauteile der Kupplungsanordnung so gewählt, dass der magnetische Fluss gezielt geführt wird. Bei dem Ausführungsbeispiel gemäß Fig. 1 (ebenso bei dem später noch zu erläuternden Ausführungsbeispiel gemäß den Fig. 4 a und 4 b) sind nicht-ferritische Werkstoffe, wie beispielsweise Aluminium, mit rechts-steigenden Schraffuren versehen, wohingegen die Bauteile bzw. Komponenten mit den links-steigenden Schraffuren aus ferritischem Material, z. B. Stahl ausgebildet sind, um den Fluss durch die letztgenannten Komponenten gezielt zu führen. Der Arbeitsluftspalt 23 wird überbrückt und der magnetische Fluss im zweiten Flusskreis 27 verläuft zurück zur Elektromagnetanordnung hier über die Antriebswelle 2.

Wird die Elektromagnetanordnung 13 mit einer ersten effektiven Stromstärke oder höher bestromt, die vorzugsweise höher ist als die zweiten effektiven Stromstärken kommt der erste magnetische Flusskreis 26 zum Tragen. Die erzeugte Magnetkraft reicht nun aus, um den Anker 18 zu verstellen und die Reibscheibenkupplung 12 einzukuppeln, so dass bei der Anordnung gemäß Fig. 2 die Flüssigkeitsreibungskupplung quasi überbrückt wird. Bei Bestromung mit der effektiven ersten Stromstärke sind die Fluidverbindungen 22 im Wesentlichen geschlossen, so dass die Flüssigkeitsreibungskupplung 4 eigentlich mit maximalem Schlupf laufen würde, was jedoch im Wesentlich nicht zum Tragen kommt, da das Sekundärteil 8 der Flüssigkeitsreibungskupplung 4 von der Reibscheibenkupplung mit Antriebswellendrehzahl rotiert wird.

In Fig. 3 ist eine Ansteuermöglichkeit einer beispielhaft in Fig. 2 gezeigten Kupplungsanordnung 1 gezeigt. Aufgetragen ist aus der linken Hochachse die Umdrehungszahl der Antriebswelle, auf der unteren Horizontalachse die Kühlmitteltemperatur eines mithilfe eines Lüfterrades zu kühlenden Kühlers und auf der rechten Hochachse die effektive Bestromung, hier angegeben in Prozent-PWM (Verhältnis des Zeitanteils "Strom an" zu Zeitanteil "Strom aus" in einer Periode), wobei 100% PWM die maximale Bestromung angibt.

Zunächst ist die Temperatur des Kühlmittels noch niedrig. Bis zu einer beispielhaft gewählten Temperatur von 91 °C wird ausschließlich die Flüssigkeitsreibungskupplung 6 betrieben, und zwar mit maximalem Schlupf. Dies wird dadurch erreicht, dass die Bestromung mit 60% der maximalen Stromstärke bestromt wird, hier mit 60% PWM. In diesem Zustand ist der Fluidvolumenstrom von der Flüssigkeitsspeicherkammer 6 in die Arbeitskammer 7 minimal, beispielsweise wenn bei einem proportionalen Steuerventil die entsprechende Fluidverbindung geschlossen oder minimiert ist. Bei einem Diskretventil ist dieses bevorzugt geschlossen. Es wird nun angenommen, dass die Temperatur des Kühlmittels weiter ansteigt, hier zunächst bis 94°C, wobei dieser Zustandsänderungen entgegengewirkt wird, indem die Elektromagnetanordnung nun mit immer geringerer bzw. hier geringer werdender zweiter effektiver Stromstärke bestromt wird. Die Bestromung wird sogar von 60% PWM auf 0% PWM reduziert. Hierdurch wird die Fluidverbindung in die Arbeitskammer weiter geöffnet und es erhöht sich der Fluidvolumenstrom von der Fluidspeicherkammer in die Arbeitskammer und damit die zur Drehmomentübertragung in der Arbeitskammer zur Verfügung stehende Fluidmenge, was wiederum zu einem reduzierten Schlupf und damit zu einer erhöhten Drehzahl des Lüfterrades führt. Diese steigt von den anfänglich konstanten 200 Umdrehungen pro Minute auf in dem gezeigten Beispiel 1600 Umdrehungen pro Minute.

In dem gezeigten Ausführungsbeispiel wird nun davon ausgegangen, dass trotz der erhöhten Lüfterraddrehzahl von 1600 Umdrehungen pro Minute die Temperatur des Kühlmittels weiter ansteigt und zwar von 94°C auf 95°C. Um der weiteren Temperaturerhöhung entgegenzuwirken wird bei Erreichen einer Temperatur von 95°C die Elektromagnetanordnung mit maximaler Bestromung, hier 100% PWM bestromt, so dass eine effektive erste Stromstärke von beispielsweise 80% PWM erreicht und sogar überschritten wird und in der Folge die Reibscheibenkupplung eingekuppelt wird. Hierdurch wird nun die Flüssigkeitreibungskupplung überbrückt und das Lüfterrad mit der Antriebswellendrehzahl betrieben. Es wird nun in dem Beispiel weiter davon ausgegangen, dass aufgrund dieser maximalen Betriebsdrehzahl von hier 1900, Umdrehungen pro Minute die Temperatur des Kühlmittels sinkt. Zu erkennen ist die entsprechende Hystereseanstauung in Fig. 3. Bei Erreichen einer Kühlmitteltemperatur von 92°C wird die Bestromung der Elektromagnetanordnung aufgrund einer entsprechenden Kennfeldhinterlegung in den nicht gezeigten Steuermitteln bzw. PWM-Bestromungsmitteln reduziert, auf hier 40% PWM, also auf eine in einem zweiten Bestromungsbereich angesiedelte zweite effektive Stromstärke, wodurch dann in der Folge das Lüfterrad nur noch mit 700 Umdrehungen pro Minute betrieben wird. Die Bestromung mit der zweiten effektiven Stromstärke, die niedriger ist als der Schwellwert zum Schalten der Reibscheibenkupplung bzw. des Ankers der Reibscheibenkupplung wird die Reibscheibenkupplung ausgekuppelt und bei dem Ausführungsbeispiel gemäß Fig. 2 der Abtrieb ausschließlich über die Scherung des Fluids in der Fluidreibungskupplung 4 angetrieben.

Die in den Fig. 4 a und 4 b ausschnittsweise dargestellte Kupplungsanordnung 1 umfasst analog zu dem Ausführungsbeispiel gemäß Fig. 2 eine Reibscheibenkupplung 12 mit einem translatorisch verstellbaren Anker 18. Diesem ist eine ortsfest angeordnete Elektromagnetanordnung 13 zugeordnet, deren Spule, wie bei den voranstehenden Ausführungsbeispielen aus Übersichtlichkeitsgründen nicht dargestellt ist. Die Elektromagnetanordnung 13 wird axial übergriffen von dem Rotor 15 der Reibscheibenkupplung. Hinsichtlich des Aufbaus der Reibscheibenkupplung 12 sowie hinsichtlich der weiteren Gemeinsamkeiten wird zur Vermeidung von Wiederholungen auf das Ausführungsbeispiel gemäß Fig. 2 verwiesen.

Wie aus Fig. 4 a zu erkennen ist, ist die Elektromagnetanordnung 13 nicht nur dem Anker 18 der Reibscheibenkupplung 12, sondern auch einem, hier jedoch als Drehanker (Rotationsanker) ausgebildeten Anker 20 einer Flüssigkeitsreibungskupplung 4 zugeordnet. Im Gegensatz zu dem Ausführungsbeispiel gemäß Fig. 2 reicht ein einziger magnetischer Flusskreis 26 aus, welcher ausgehend von der einzigen Elektromagnetanordnung zunächst durch die Reibscheibenkupplung 12, genauer deren Rotor 15, und dem Anker 18 verläuft und dann über den Anker 20 geschlossen wird. Dieser, wie erwähnt als Drehanker ausgebildete Anker 20 ist Teil der Antriebswelle 2 bzw. in der als Hohlwelle ausgebildeten Antriebswelle 2 angeordnet. Der Anker 20 der Flüssigkeitsreibungskupplung 4 rotiert während des Betriebs gemeinsam mit der Antriebswelle 2, kann jedoch in Abhängigkeit der Bestromung der Elektromagnetanordnung 13 relativ zu dieser verdreht werden. Durch diese relative Drehbewegung wird ein Ventilelement 25 des hydraulischen Steuerventils 5 der Flüssigkeitsreibscheibenkupplung 4 relativ zu mindestens einer Fluidverbindung 22 verdreht, wobei hierdurch die Flüssigkeitsmenge in der Arbeitskammer 7 beeinflusst wird. Hierzu ist der Anker 20 axial langgestreckt ausgebildet und erstreckt sich über das der Zeichnungsebene rechte Ende der Antriebswelle 2 hinaus und ist innerhalb der Fluidspeicherkammer 6 drehfest mit dem Ventilelement 25 verbunden. Zum Rückstellen des als Drehanker ausgebildeten Ankers 20 ist ein Federelement 21 vorgesehen, welches der durch Bestromung der Elektromagnetanordnung 13 verursachten Drehbewegung des Ventilelementes 25 entgegenwirkt.

Bei der Ausführungsvariante der Kupplungsanordnung 1 gemäß in Fig. 4 a und 4 b ist der Arbeitsspalt 23 zwischen Radialfortsätzen 29 des Ankers 20 und entgegengesetzt, d. h. radial nach innen gerichteten Radialfortsätzen 30 der Antriebswelle 2 angeordnet bzw. ausgebildet.

Wird die Elektromagnetanordnung 13 mit einer ersten effektiven Stromstärke oder höher bestromt, die vorzugsweise höher ist als die zweiten effektiven Stromstärken, wird der Anker 18 der Reibscheibenkupplung 12 verstellt, wodurch die Flüssigkeitsreibungskupplung 4 überbrückt wird. Bei Bestromung mit zweiten Stromstärken, also in einem zweiten Bestromungsbereich kann die Position des als Drehanker ausgebildeten Ankers 20 beeinflusst werden und somit die Rotationsposition des Ventilelementes 25 relativ zu den Fluidverbindungen 22. Hierdurch wird die Rückflussmenge des zur Drehmomentübertragung zur Verfügung stehenden Fluids in die Arbeitskammer 7 und damit der Schlupf der Flüssigkeitsreibungskupplung 4 eingestellt. Der Schlupf ist also abhängig von dem Drehwinkel des Ankers 20 relativ zur Antriebswelle 2.

### Bezugszeichen

- 1: Kupplungsanordnung
- 2: Antriebselle
- 3: Primärteil
- 4: Flüssigkeitsreibungskupplung
- 5: Steuerventil
- 6: Fluidspeicherkammer
- 7: Arbeitskammer
- 8: Sekundärteil
- 9: Lager
- 10: Abtrieb
- 11: Lüfterrad
- 12: Reibscheibenkupplung
- 13: Elektromagnetanordnung
- 14: weiteres Lager
- 15: Rotor
- 16: Trennung
- 17: Arbeitsluftspalt
- 18: Anker
- 19: Rückstellmittel
- 20: Anker
- 21: Federelement
- 22: Fluidverbindung
- 23: Arbeitsspalt
- 24: magnetische Trennungen
- 25: Ventilelement
- 26: erster magnetischer Flusskreis
- 27: zweiter magnetischer Flusskreis
- 28: flussleitende Bauteile
- 29: Radialfortsätze
- 30: Radialfortsätze

## Patentansprüche

1. Kupplungsanordnung zum Übertragen eines Antriebsdrehmomentes von einer Antriebswelle (2) auf ein Nebenaggregat, insbesondere auf ein Lüfterrad (11), eines Kraftfahrzeugs, umfassend eine Antriebswelle (2), einen Abtrieb (10) sowie eine mittels einer Elektromagnetanordnung (13) schaltbare Reibscheibenkupplung (12),
**dadurch gekennzeichnet,**
**dass** die Kupplungsanordnung (1) zusätzlich zu der Reibscheibenkupplung (12) zur Drehmomentübertragung von der Antriebswelle (2) auf den Abtrieb (10) eine Flüssigkeitsreibungskupplung (4) umfasst, deren hydraulisches Steuerventil (5) zur Einstellung des Schlupfes mittels der Elektromagnetanordnung (13) der Reibscheibenkupplung (12) ansteuerbar ist.

2. Kupplungsanordnung nach Anspruch 1,
**dadurch gekennzeichnet,**
**dass** die Reibscheibenkupplung (12) und die Flüssigkeitsreibungskupplung (4) parallel angeordnet sind, so dass bei ausgekuppelter Reibscheibenkupplung (12) eine Drehmomentübertragung von der Antriebswelle (2) auf den Abtrieb (10) ausschließlich über die Flüssigkeitsreibungskupplung (4) möglich ist.

3. Kupplungsanordnung nach einem der Ansprüche 1 oder 2,
**dadurch gekennzeichnet,**
**dass** die Flüssigkeitsreibungskupplung (4) mittels der Reibscheibenkupplung (12) überbrückbar ist, so dass eine Drehmomentübertragung von der Antriebswelle (2) auf den Abtrieb (10) schlupffrei möglich ist.

4. Kupplungsanordnung nach einem der vorhergehenden Ansprüche,
**dadurch gekennzeichnet,**
**dass** der Abtrieb (10) von einer Sekundärseite der Flüssigkeitsreibungskupplung (4) gebildet ist, oder, vorzugsweise schlupffrei, mit dieser gekoppelt ist.

5. Kupplungsanordnung nach einem der vorhergehenden Ansprüche,
**dadurch gekennzeichnet,**
**dass** die Sekundärseite der Flüssigkeitsreibungskupplung (4) reibschlüssig über die Reibscheibenkupplung (12) drehmomentübertragend mit der Antriebswelle (2) verbindbar ist.

6. Kupplungsanordnung nach einem der Ansprüche 4 oder 5,
**dadurch gekennzeichnet,**
**dass** die Sekundärseite der Flüssigkeitsreibungskupplung (4) einen Anker (18) der Reibscheibenkupplung (12) und Rückstellmittel (19) für den Anker (18) insbesondere eine Rückstellfeder, trägt.

7. Kupplungsanordnung nach einem der vorhergehenden Ansprühe,
**dadurch gekennzeichnet,**
**dass** die Reibscheibenkupplung (12) und die Flüssigkeitsreibungskupplung (4) derart ausgebildet sind, dass durch Bestromen der Elektromagnetanordnung (13) einer ersten effektiven Stromstärke die Reibscheibenkupplung (12) schaltbar ist und durch Bestromen mit einer von der ersten Stromstärke unterschiedlichen zweiten effektiven Stromstärke, die vorzugsweise geringer ist als die erste Stromstärke, das Steuerventil (5) der Flüssigkeitsreibungskupplung (4) ansteuerbar ist.

8. Kupplungsanordnung nach Anspruch 7,
**dadurch gekennzeichnet**,
das die Elektromagnetanordnung (13) mit unterschiedlichen zweiten effektiven Stromstärken aus einem zweiten Bestromungsbereich zum Einstellen unterschiedlicher Schlupfwerte bestrombar ist und/oder dass die Elektromagnetanordnung (13) durch unterschiedliche Tastverhältnisse mit zweiten effektiven Stromstärken zum Einstellen unterschiedlicher Schlupfwerte bestrombar ist.

9. Kupplungsanordnung nach Anspruch 8,
**dadurch gekennzeichnet,**
**dass** die mindestens eine effektive zweite Stromstärke des zweiten Bestromungsbereichs geringer ist als die einem ersten Bestromungsbereich zugeordnete erste effektive Stromstärke zum Betätigen der Reibscheibenkupplung (12).

10. Kupplungsanordnung nach einem der Ansprüche 8 oder 9,
**dadurch gekennzeichnet,**
**dass** das hydraulische Steuerventil (5) derart ausgebildet und ansteuerbar ist, dass mit zunehmender effektiver zweiter Stromstärke und/oder größer werdenden Tastverhältnis der Schlupf der Flüssigkeitsreibungskupplung (4) zunimmt.

11. Kupplungsanordnung nach einem der Ansprüche 7 bis 10,
**dadurch gekennzeichnet,**
**dass** das Steuerventil (5) der Fluidreibungskupplung bei Bestromung der Elektromagnetanordnung (13) mit der ersten effektiven Stromstärke geschlossen oder alternativ vollständig geöffnet ist.

12. Kupplungsanordnung nach einem der Ansprüche 7 bis 11,
**dadurch gekennzeichnet,**
**dass** zum Bestromen der Elektromagnetanordnung (13) mit der ersten und zweiten effektiven Stromstärke PWM-Mittel oder Stromregelkreismittel vorgesehen sind.

13. Kupplungsanordnung nach einem der vorhergehenden Ansprüche,
**dadurch gekennzeichnet,**
**dass** ein durch Bestromen der Elektromagnetanordnung (13) mit der zweiten effektiven Stromstärke verstellbarer Anker (20) des Steuerventils (5) der Fluidreibungskupplung ein, vorzugsweise in der Antriebswelle (2) angeordneter, Rotationsanker, oder ein Klappanker oder ein translatorisch verstellbarer Anker (20) ist.

14. Verfahren zum Ansteuern einer Kupplungsanordnung (1) zum Übertragen eines Antriebsdrehmomentes von einer Antriebswelle (2) auf ein Nebenaggregat, insbesondere auf ein Lüfterrad (11), eines Kraftfahrzeugs, insbesondere nach einem der vorhergehenden Ansprüche, umfassend eine Antriebswelle (2), einen Abtrieb (10), eine mittels einer Elektromagnetanordnung (13) schaltbare Reibscheibenkupplung (12),
**dadurch gekennzeichnet,**
**dass** die Kupplungsanordnung (1) zusätzlich zu der Reibscheibenkupplung (12) zur Drehmomentübertragung von der Antriebswelle (2) auf den Abtrieb (10) eine Flüssigkeitsreibungskupplung (4) umfasst, deren hydraulisches Steuerventil (5) zur Einstellung des Schlupfes mittels der Elektromagnetanordnung (13) der Reibscheibenkupplung (12) angesteuert wird.

## Claims

1. A clutch arrangement for transmitting a drive torque from a drive shaft (2) to a secondary assembly, in particular to a fan wheel(11), of a motor vehicle, comprising a drive shaft (2), an output (10) and a friction disc clutch (12) which can be shifted by means of an electromagnetic arrangement (13),
**characterized in**
**that** the clutch arrangement (1) comprises, in addition to the friction disc clutch (12) for transmitting torque from the drive shaft (2) to the output (10), a fluid friction clutch (4) whose hydraulic control valve (5) can be actuated by means of the electromagnetic arrangement (13) of the friction disc clutch (12) in order to set the slip.

2. The clutch arrangement according to claim 1,
**characterized in**
**that** the friction disc clutch (12) and the fluid friction clutch (4) are arranged in parallel, so that with disengaged friction disc clutch (12) a torque transmission is possible from the drive shaft (2) to the output (10) exclusively via the fluid friction clutch (4).

3. The clutch arrangement according to one of claims 1 or 2,
**characterized in**
**that** the fluid friction clutch (4) is able to be bridged by means of the friction disc clutch (12), so that a torque transmission is possible in a slip-free manner from the drive shaft (2) to the output (10).

4. The clutch arrangement according to one of the preceding claims,
**characterized in**
**that** the output (10) is formed by a secondary side of the fluid friction clutch (4), or is coupled therewith, preferably in a slip-free manner.

5. The clutch arrangement according to one of the preceding claims,
**characterized in**
**that** the secondary side of the fluid friction clutch (4) is able to be connected in a frictionally engaged manner via the friction disc clutch (12) in a torque-transmitting manner with the drive shaft (2).

6. The clutch arrangement according to one of claims 4 or 5,
**characterized in**
**that** the secondary side of the fluid friction clutch (4) carries an armature (18) of the friction disc clutch (12) and return means (19) for the armature (18), in particular a return spring.

7. The clutch arrangement according to one of the preceding claims,
**characterized in**
**that** the friction disc clutch (12) and the fluid friction clutch (4) are constructed such that by supplying the electromagnetic arrangement (13) with a first effective current strength the friction disc clutch (12) is able to be shifted, and by supplying with a second effective current strength, which is different from the first current strength, preferably lower than the first current strength, the control valve (5) of the fluid friction clutch (4) is able to be actuated.

8. The clutch arrangement according to claim 7,
**characterized in**
**that** the electromagnetic arrangement (13) is able to be supplied with different second effective current strengths from a second current feed range for setting different slip values and/or that the electromagnetic arrangement (13) is able to be supplied through different duty factors with second effective current strengths for setting different slip values.

9. The clutch arrangement according to claim 8,
**characterized in**
**that** the at least one effective second current strength of the second current feed range is lower than the first effective current strength, associated with a first current feed range, for activating the friction disc clutch (12).

10. The clutch arrangement according to one of claims 8 or 9,
**characterized in**
**that** the hydraulic control valve (5) is constructed and able to be actuated such that with increasing effective second current strength and/or a duty factor becoming greater, the slip of the fluid friction clutch (4) increases.

11. The clutch arrangement according to one of claims 7 to 10,
**characterized in**
**that** the control valve (5) of the fluid friction clutch is closed or alternatively completely opened on supplying the electromagnetic arrangement (13) with the first effective current strength.

12. The clutch arrangement according to one of claims 7 to 11,
**characterized in**
**that** for supplying the electromagnetic arrangement (13) with the first and second effective current strength, PWM means or current control circuit means are provided.

13. The clutch arrangement according to one of the preceding claims,
**characterized in**
**that** an armature (20) of the control valve (5) of the fluid friction clutch, adjustable by supplying the electromagnetic arrangement (13) with the second effective current strength, is a rotating armature, preferably arranged in the drive shaft (2), or a tilting armature or an armature (20) which is able to be adjusted in a translatory manner.

14. A method for actuating a clutch arrangement (1) for transmitting a drive torque from a drive shaft (2) to a secondary assembly, in particular to a fan wheel (11) , of a motor vehicle, in particular according to one of the preceding claims, comprising a drive shaft (2), and output (10), a friction disc clutch (12) able to be shifted by means of an electromagnetic arrangement (13),
**characterized in**
**that** the clutch arrangement (1) comprises, in addition to the friction disc clutch (12) for transmitting torque from the drive shaft (2) to the output (10), a fluid friction clutch (4) whose hydraulic control valve (5) is actuated by means of the electromagnetic arrangement (13) of the friction disc clutch (12) in order to set the slip.

## Revendications

1. Système d'embrayage pour la transmission d'un couple d'entraînement depuis un arbre d'entraînement (2) jusqu'à un groupe secondaire, en particulier une roue de ventilateur (11), d'un véhicule automobile, comprenant un arbre d'entraînement (2), un organe de sortie (10) ainsi qu'un embrayage à disques de friction (12) pouvant être couplé au moyen d'un dispositif électromagnétique (13), **caractérisé en ce que** le système d'embrayage (1) comprend en plus de l'embrayage à disques de friction (12) pour la transmission de couple depuis l'arbre d'entraînement (2) jusqu'à l'organe de sortie (10) un embrayage à frottement entre fluides (4), dont la soupape de commande hydraulique (5) peut être commandée au moyen du dispositif électromagnétique (13) de l'embrayage à disques de friction (12) pour le réglage du glissement.

2. Système d'embrayage selon la revendication 1, **caractérisé en ce que** l'embrayage à disques de friction (12) et l'embrayage par frottement entre fluides (4) sont disposés en parallèle, de telle manière que, lorsque l'embrayage à disques de friction (12) est débrayé, une transmission de couple depuis l'arbre d'entraînement (2) jusqu'à l'organe de sortie (10) soit possible exclusivement par l'embrayage par frottement entre fluides (4).

3. Système d'embrayage selon l'une des revendications 1 ou 2, **caractérisé en ce que** l'embrayage par frottement entre fluides (4) peut être contourné au moyen de l'embrayage à disques de friction (12), de telle manière qu'une transmission de couple depuis l'arbre d'entraînement (2) jusqu'à l'organe de sortie (10) soit possible sans glissement.

4. Système d'embrayage selon l'une quelconque des revendications précédentes, **caractérisé en ce que** l'organe de sortie (10) est formé par un côté secondaire de l'embrayage par frottement entre fluides (4), ou, de préférence sans glissement, est couplé à celui-ci.

5. Système d'embrayage selon l'une quelconque des revendications précédentes, **caractérisé en ce que** le côté secondaire de l'embrayage par frottement entre fluides (4) peut être relié par friction au moyen de l'embrayage à disques de friction (12) à l'arbre d'entraînement (2) avec transmission de couple.

6. Système d'embrayage selon une des revendications 4 ou 5, **caractérisé en ce que** le côté secondaire de l'embrayage par frottement entre fluides (4) porte un induit (18) de l'embrayage à disques de friction (12) et des moyens de rappel (19) pour l'induit (18), en particulier un ressort de rappel.

7. Système d'embrayage selon l'une quelconque des revendications précédentes, **caractérisé en ce que** l'embrayage à disques de friction (12) et l'embrayage par frottement entre fluides (4) sont configurés de telle manière que, en alimentant le dispositif électromagnétique (13) avec une première intensité effective de courant, l'embrayage à disques de friction (12) puisse être embrayé et que, en l'alimentant avec une deuxième intensité effective de courant, différente de la première, qui est de préférence inférieure à la première intensité de courant, la soupape de commande (5) de l'embrayage par frottement entre fluides (4) puisse être commandée.

8. Système d'embrayage selon la revendication 7, **caractérisé en ce que** le dispositif électromagnétique (13) peut être alimenté avec différentes deuxièmes intensités de courant dans une deuxième plage d'alimentation pour le réglage de différentes valeurs de frottement et/ou **en ce que** le dispositif électromagnétique (13) peut être alimenté sous différents rapports de balayage avec des deuxièmes intensités de courant effectives pour le réglage de différentes valeurs de glissement.

9. Système d'embrayage selon la revendication 8, **caractérisé en ce que** ladite au moins une deuxième intensité de courant de la deuxième plage d'alimentation est inférieure à la première intensité de courant effective associée à une première plage d'alimentation, pour actionner l'embrayage à disques de friction (12).

10. Système d'embrayage selon une des revendications 8 ou 9, **caractérisé en ce que** la soupape de commande hydraulique (5) est configurée et peut être commandée de telle manière que le glissement de l'embrayage par frottement entre fluides (4) augmente lorsque la deuxième intensité de courant effective augmente et/ou que le rapport de balayage augmente.

11. Système d'embrayage selon l'une quelconque des revendications 7 à 10, **caractérisé en ce que** la soupape de commande (5) de l'embrayage par frottement entre fluides est fermée ou en variante entièrement ouverte lors de l'alimentation du dispositif électromagnétique (13) avec la première intensité de courant effective.

12. Système d'embrayage selon l'une quelconque des revendications 7 à 11, **caractérisé en ce qu'**il est prévu des moyens PWM ou des moyens de circuit de régulation de courant pour l'alimentation du dispositif électromagnétique (13) avec la première et la deuxième intensité de courant effective.

13. Système d'embrayage selon l'une quelconque des revendications précédentes, **caractérisé en ce qu'**un induit (20) de la soupape de commande (5) de l'embrayage par frottement entre fluides, déplaçable par alimentation du dispositif électromagnétique (13) avec la deuxième intensité de courant effective, est un induit rotatif, disposé de préférence dans l'arbre d'entraînement (2) ou un induit rabattable ou un induit (20) déplaçable en translation.

14. Procédé pour commander un système d'embrayage (1) pour la transmission d'un couple d'entraînement depuis un arbre d'entraînement (2) jusqu'à un groupe secondaire, en particulier une roue de ventilateur (11), d'un véhicule automobile, en particulier selon l'une quelconque des revendications précédentes, comprenant un arbre d'entraînement (2), un organe de sortie (10), un embrayage à disques de friction (12) pouvant être couplé au moyen d'un dispositif électromagnétique (13), **caractérisé en ce que** le système d'embrayage (1) comprend en plus de l'embrayage à disques de friction (12) pour la transmission d'un couple depuis l'arbre d'entraînement (2) jusqu'à l'organe de sortie (10), un embrayage par frottement entre fluides (4), dont la soupape de commande hydraulique (5) peut être commandée au moyen du dispositif électromagnétique (13) de l'embrayage à disques de friction (12) pour le réglage du glissement.
